# EUROPEAN PATENT APPLICATION

(11) **EP 2 246 665 A2**
(43) Date of publication of application: **03.11.2010**
(21) Application number: 10160648.1
(22) Date of filing: 21.04.2010
(51) Int. Cl.: G01C 21/16

(54) **Thin walled inertial measurement unit (IMU) packaging jacket with integral flexible flange**

(30) Priority: 30.04.2009 US 433404
(71) Applicant: Honeywell International Inc., Morristown, NJ 07962 (US)
(72) Inventor: Krsiean, Michael, Morristown, NJ 07962-2245 (US)
(74) Representative: Buckley, Guy Julian

(57) **Abstract**

A packaging jacket featuring an integral flexible flange. The packaging jacket includes a cylindrical sleeve and a component sub-section that stacks within the sleeve. When stacked, the component sub-section encloses one or more interior chambers that can house an IMU sensor, or other devices. The component sub-section is uniquely held within the sleeve by a flange at one end and a snap ring at the other.

## Description

### BACKGROUND OF THE INVENTION

Technological innovation has led to a reduction in the size and weight of many electrical hardware components. This is particularly true in the field of inertial measurement unit (IMU) sensors, where the application of micro-electromechanical systems (MEMS) fabrication techniques has dramatically reduced the size and weight of IMU sensor components compared with their predecessors.

In aviation, the size and weight of flight hardware is a critical consideration. This has driven the application of MEMS fabrication techniques to aviation-application IMU sensors. The resulting reduction in sensor size has caused the overall size of an IMU package to be dictated more and more by the size of the packaging than by the functionally performing sensing components themselves. The reduction in sensor size provides a corresponding opportunity to reduce package size by reducing the bulk of the packaging materials that house those sensing components.

### SUMMARY OF THE INVENTION

The present invention provides a packaging jacket that provides a simple and compact enclosure for inertial measurement unit (IMU) sensors, or other devices. A first part of the jacket is made up of a thin-walled cylindrical sleeve. A second part of the jacket is made up of one or more cylindrically-shaped component sub-sections that stack sequentially inside the length of the cylindrical sleeve.

At one end of the cylindrical sleeve is a flexible flange that circumscribes at least a portion of the sleeve's interior edge. At the sleeve's opposite end, on its interior face, is a snap ring groove to accept an internal snap ring fastener. Component sub-sections are stacked one on top of the other inside the sleeve, forming a component sub-section stack.

The component sub-section stack is of a height that in order for a snap ring to be installed into the snap ring groove while the stack is within the sleeve, the flexible flange at the sleeve's opposite end must be displaced. Because the flange is flexible, a force applied to the component sub-section stack at the snap ring end displaces the flange. Displacement of the flange allows the component sub-section stack to move forward in the
sleeve, providing room for the snap ring to be installed in the snap ring groove. At the same time, mechanical energy from the applied force becomes stored in the compressed flange.

After installing the snap ring in its groove, the applied force is removed. The displaced flange rebounds, moving the component sub-section stack backward in the sleeve in the direction of the snap ring. When the component sub-section stack can move no further due to the installed snap ring, the remaining unrelieved energy stored in the flexible flange remains applied against the component sub-section stack. A constant compressive force is left on the component sub-section stack, which is trapped between the flexible flange and the snap ring. Within the component sub-section stack is one or more interior chambers, which are available for housing IMU sensors, or other devices.

The benefits afforded by this invention are simplification in packaging, a reduction in the number of parts, removal of bulk, and a reduction in cost. All four of these benefits are accomplished mainly by elimination of machine threads and a controlled-torque locking nut system traditionally used in many IMU sensor housings.

### BRIEF DESCRIPTION OF THE DRAWINGS

Preferred and alternative embodiments of the present invention are described in detail below with reference to the following drawings:

FIGURE 1 is a perspective view of a MEMS IMU sensor package formed in accordance with an embodiment of the present invention;

FIGURE 2 is a cross-sectional view of the MEMS IMU sensor package of FIGURE 1;

FIGURE 3 is an exploded cross-sectional view of the MEMS IMU sensor package of FIGURE 2;

FIGURE 4 is a perspective view of a cross-section of a component of the present invention;

FIGURE 5 shows a cross-sectional view of a portion of the package shown in FIGURE 1; and

FIGURE 6 is a cross-sectional zoom view of a portion of a flexible flange formed in accordance with an embodiment of the present invention.

### DETAILED DESCRIPTION OF THE INVENTION

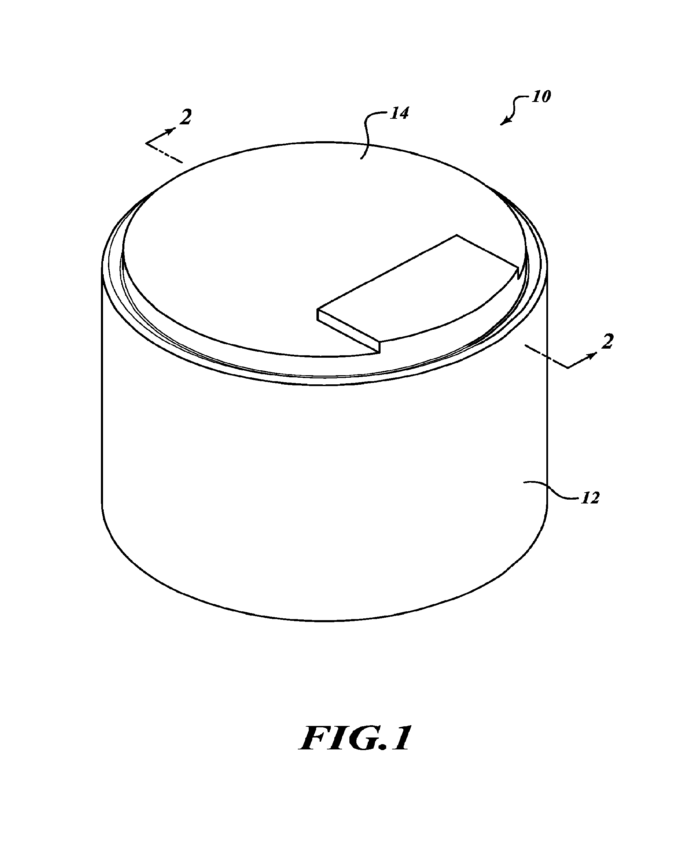

FIGURE 1 illustrates an assembled embodiment of a thin-walled inertial measurement unit (IMU) packaging jacket 10 that includes a cylindrical sleeve 12. The cylindrical sleeve 12 hold in place multiple interior package components 14.

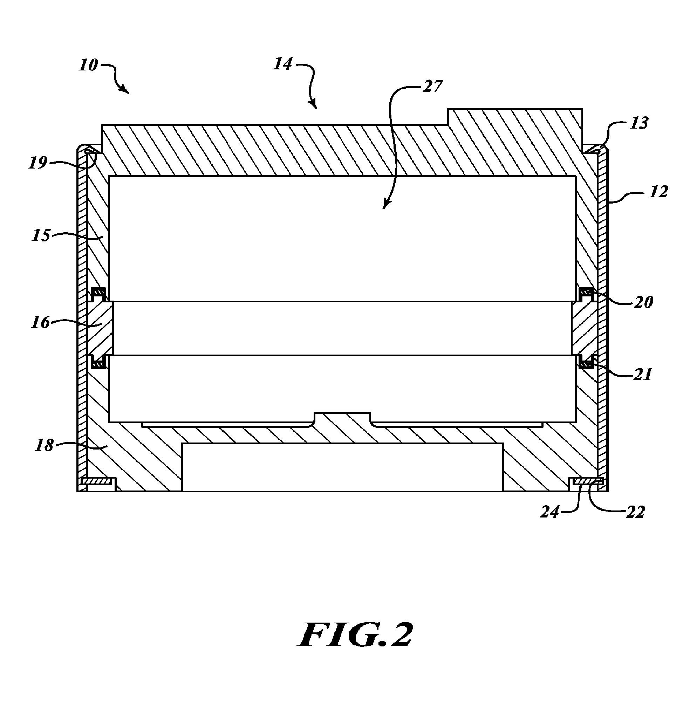

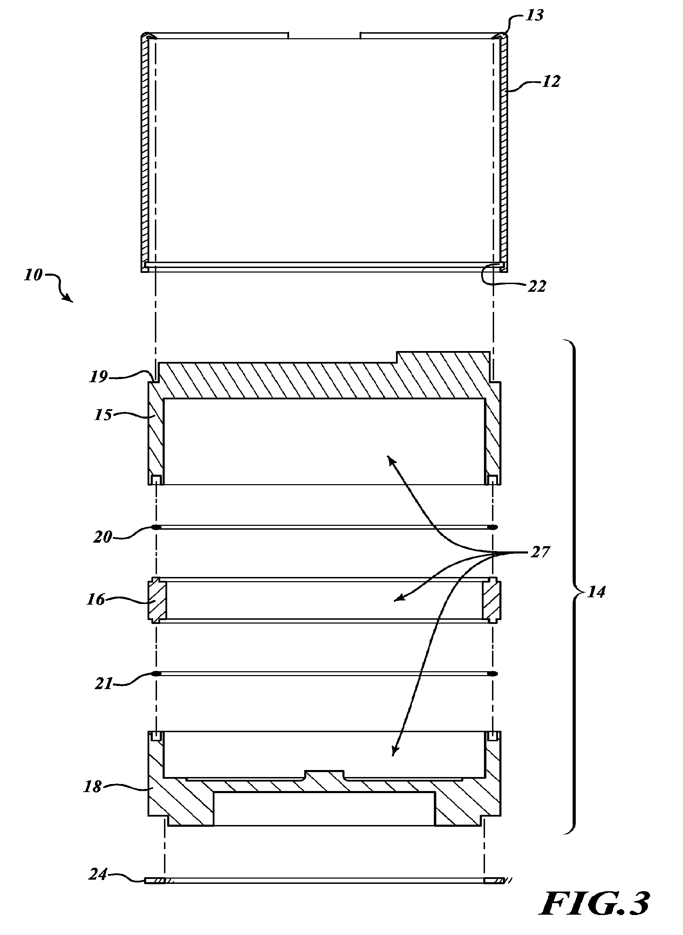

FIGURES 2 and 3 illustrate cross-sectional views of the thin-walled IMU packaging jacket 10. FIGURE 2 shows the packaging jacket 10 in assembled form and FIGURE 3 shows the jacket 10 in exploded form. The multiple interior package components 14 include an upper component sub-section 15, a middle component sub-section 16, a lower component sub-section 18, upper and lower seals 20, 21and a snap ring 24. The cylindrical sleeve 12 includes an integral flexible flange 13 and a snap ring groove 22. Upper component 15 includes a ledge 19. Within the component sub-section stack 14 is an interior chamber 27.

In one embodiment, the sleeve 12 is an elongated cylinder, hollow in the center, and open at each end. The sleeve 12 has sufficient length and inside diameter to accept the component sub-sections 15, 16, 18. The wall thickness of the sleeve 12 is of a thickness that provides rigidity, plus a desired level of mechanical impact protection to prevent a physical object from piercing the sleeve 12. At an open end of the sleeve 12 is the flexible flange 13.

The three component sub-sections 15, 16, 18 have nominally the same outside diameter, which is slightly less than the inside diameter of the sleeve 12. The diameter facilitates the insertion of the three component sub-sections 15, 16, 18 snugly but easily within the sleeve 12. In other embodiments, a different number of component sub-sections could be used. By stacking the component sub-sections components 15, 16, 18 inside the sleeve 12, the interior chamber 27 is formed. Optimally the interior chamber 27 is of a size which volumetrically contains micro-electromechanical system (MEMS) sensor parts and supporting electronics (not shown) in the most compact size possible.

In one embodiment, the upper and lower seals 20, 21 are located in cavities formed between the upper and middle component sub-sections 15, 16 and middle and lower component sub-sections 16, 18, sealing the interior chamber 27 from the outside atmosphere.

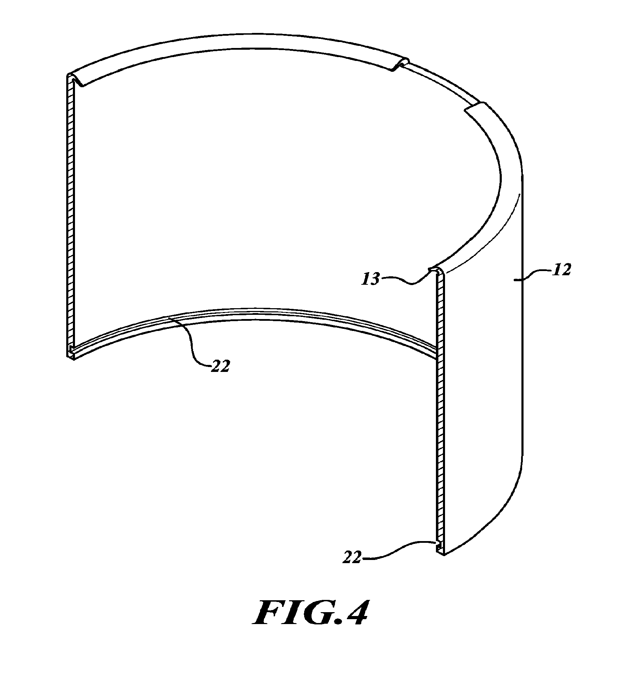

As shown in FIGURE 4 the flexible flange 13 appears as a lip, or curled element, that circumscribes the interior rim of one end of the sleeve 12. In one embodiment, the flange 13 is integrally formed with the sleeve 12 and made of the same material as the bulk of the sleeve 12. In a further refinement of this embodiment, the flange 13 is of a composition that furnishes the flange 13 with flexibility in a direction axial to the cylindrical sleeve 12. In an alternative embodiment, the flange 13 is formed separately from the sleeve 12, but is fastened to an end of the sleeve 12. In yet another embodiment, the flange 13 circumscribes only a portion of the interior rim of one end of the sleeve 12.

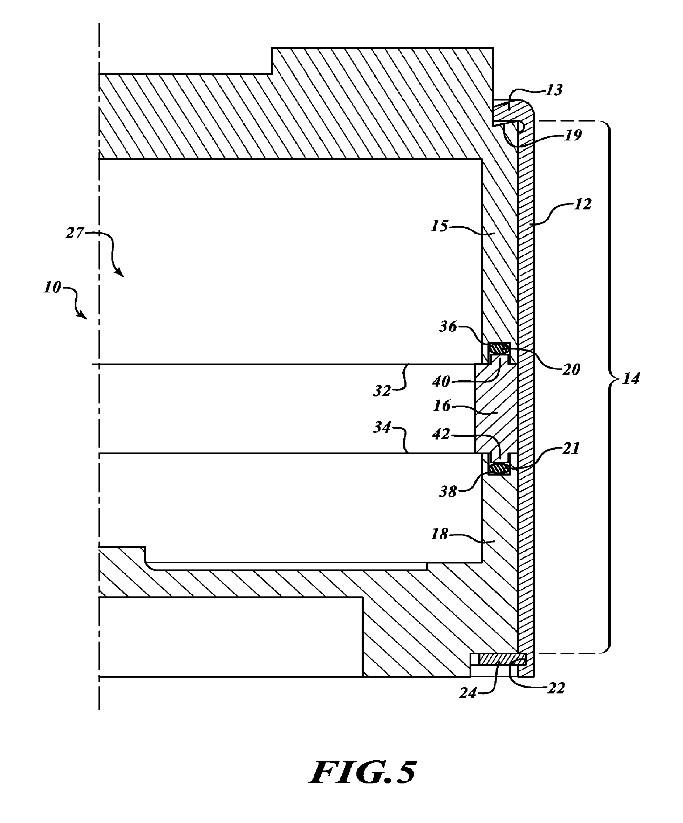

FIGURE 5 shows a cross-sectional view of the component sub-section stack 14 installed in the sleeve 12. The upper component sub-section 15 has an outside diameter that is less than the inside diameter of the sleeve 12, but greater than the inside diameter of the flexible flange 13. Furthermore, the upper component sub-section 15 includes the ledge 19 along its radial edge that, on insertion of the upper component sub-section 15 into the sleeve 12, meets the flexible flange 13. Travel of the upper component sub-section 15 within the sleeve 12 is limited by collision of the ledge 19 with the flange 13 inside the sleeve 12.

In one embodiment, the height of the component sub-section stack 14 at the ledge 19 slightly exceeds the length of the sleeve 12 measured from the inside tip of the flexible flange 13 in an un-flexed state to the inside edge of the snap ring groove 22. As a result of these dimensions, with installation of the snap ring 24 into the snap ring groove 22, the component sub-section stack 14 flexes the flexible flange 13.

Initial flexure of the flange 13 is achieved by application of an external force to the component sub-section stack 14 on the exterior face of the lower component sub-section 18. The applied force moves the component sub-section stack 14 toward the flange 13 in the sleeve 12 until the ledge 19 collides with the flexible flange 13, causing the flange 13 to flex. Flexure of the flange 13 causes mechanical energy from the applied external force to be transmitted to and stored in the flexible flange 13.

With installation of the snap ring 24 and removal of the externally applied force, the component sub-section stack 14 rebounds away from the flange 13 and toward the interior face of the snap ring 24. The immobility of the snap ring 24 in the snap ring groove 22 causes the exterior face of the lower component sub-section 18 to come to rest against the interior face of the snap ring 24. The energy left stored in the flange 13 from f1 exure remains in the flange 13, and therefore becomes applied to the component sub-section stack 14. This maintains the component sub-sections 15, 16, 18 in a compressed state for as long as the snap ring 24 remains installed in the snap ring groove 22.

The snap ring groove 22 is integral with the sleeve 12 and circumscribes the sleeve 12 substantially close to the sleeve's end at the end opposite the flange 13. The snap ring groove 22 and the snap ring 24 fit together according to standards well-known in the art.

The middle component sub-section 16 has outside and inside diameters that nominally match the outside and inside diameters of the upper component sub-section 15.
The interior of the middle component sub-section 16 is substantially hollow, and its thickness in the axial direction is variable from embodiment to embodiment. The lower component sub-section 18 is substantially similar to the upper component sub-section 15 in its diameters (inside and outside), thickness in the axial direction, and in the shape and dimensions of its interior face.

To create the interior chamber 27 for housing an IMU sensor, the component sub-sections 15, 16, 18 are assembled into the component sub-section stack 14, as shown in FIGURE 2. In the component sub-section stack 14, individual sub-section components are ordered so that on insertion of the component sub-section stack 14 into the sleeve 12, the exterior face of the upper component sub-section 15 faces the flange 13 and the exterior face of the lower component sub-section 18 faces the snap ring 24. The middle component sub-section 16 is positioned between the upper component sub-section 15 and the lower component sub-section 18.

The interior chamber 27 is formed by stacking together the component sub-sections 15, 16 and 18. In FIGURE 5, for purposes of sealing the interior chamber 27 from the outside atmosphere, the upper and lower seals 20 and 21 are positioned at upper and lower mating joints 32 and 34 between the upper and middle component sub-sections 15, 16, and middle and lower component sub-sections 16, 18. In one embodiment, the mating joints 32 and 34 are located near the radial edge of the component sub-sections 15, 16, 18 in order to maximum the potential volume of the interior chamber 27. Furthermore, for convenience the upper and lower seals 20, 21 resemble an O-ring of circular profile and an overall diameter slightly less than the outside diameter of the upper component sub-section 15.

The upper component sub-section 15 contains on its interior face a narrow upper sub-section channel 36 concentric with the upper component sub-section 15, and of a width and diameter substantially matching the width and diameter of the upper seal 20. The depth of the upper sub-section channel 36 is somewhat greater than the profile of the upper seal 20.

Opposite the upper sub-section channel 36, on the middle sub-section 16, is a narrow top-facing ridge 40 concentric with the edge of the middle component sub-section 16. The top-facing ridge 40 on the middle component sub-section 16 is positioned so that when the upper and middle component sub-sections 15, 16 and the upper seal 20 are concentrically located about a given axis, the top-facing ridge 40 of the middle component sub-section 16, the upper sub-section channel 36 of the upper component sub-section 15, and the upper seal 20 mutually align. Furthermore, the dimensions of the top-facing ridge 40 are such that the top-facing ridge 40 substantially occupies the width of the upper sub-section channel 36 in the upper component sub-section 15. On stacking the upper and middle component sub-sections 15, 16 and the upper seal 20, the height of the top-facing ridge 40 interferes with the upper seal 20 to a degree that provides optimal sealing between the upper seal 20, and the upper and middle component sub-sections 15 and 16.

The lower seal 21, a lower sub-section channel 38, and the bottom-facing ridge 42 are substantially identical to the upper seal 20, the upper sub-section channel 36, and the top-facing ridge 40. The lower seal 21 mates and seals the faces of the middle and lower component sub-sections 16, 18 in substantially the same manner as the upper seal 20 seals the upper and middle component sub-sections 14, 16.

The upper and lower seals 20 and 21 become compressed by the same force that displaces the flange 13. The compliance of the upper and lower seals 20, 21 is high relative to the compliance of the flange 13, so that the amount of force taken up by the upper and lower seals 20, 21 compared with that taken up by the flange 13 is insignificant. The upper and lower seals 20, 21 become compressed until the upper and lower mating joints 32, 34 of the component sub-sections 15, 16, 18 meet, providing the twin benefit of a complete seal and a rigid structure to deliver the balance of the applied force to the flange 13.

Alternative embodiments for sealing a cavity from an outside atmosphere while using a flexible flange are still considered within the scope of this invention. The possibility for an embodiment where no sealing components are used is also within the scope of invention, for example in applications where only mechanical protection, but not atmospheric isolation, is needed.

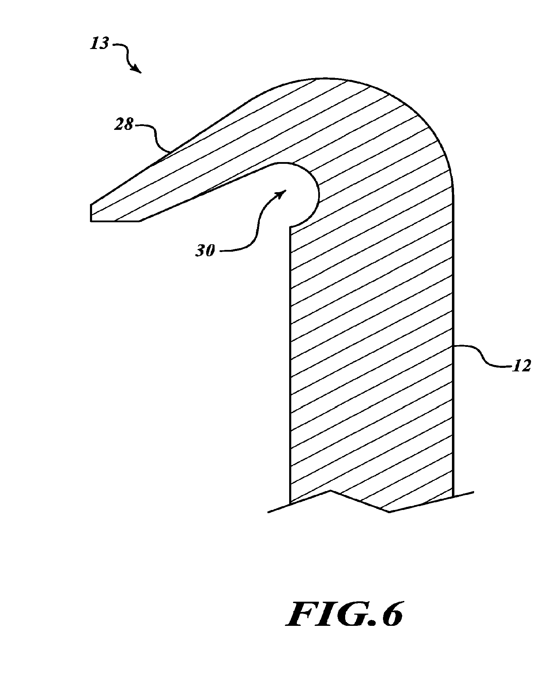

FIGURE 6 illustrates the flexible flange 13 in an un-flexed state. In particular, the flange 13 has a flange lip 28 and a flange stiffness tuning feature 30. The flange lip 28 extends inward from the sleeve 12 into the opening of the sleeve 12. The lip 28 interferes with the ledge 19 when the upper component sub-section 15 is slid within the sleeve 12.

The flange stiffness tuning feature 30 is a channel that circumscribes the interior face of sleeve 12 in the region where the lip 28 meets the sleeve 12. The flange stiffness tuning feature 30 can be cupped, notched or any shape that relaxes the stiffness of the flange 13. The depth, the fraction of the circumference circumscribed, and the location of the stiffness tuning feature 30 can vary as would be obvious to one skilled in the art to alter the flexibility of the flange 13. In one embodiment, the tuning feature circumscribes only 50% of the full circumference, distributed in ten even segments. In another embodiment, the tuning feature 30 is on the outside of the sleeve 12.

In one embodiment, the flange 13 is integral with the sleeve 12, and is a spring steel or similar metallic composition that provides a flexural characteristic to the flange lip 28. Considered included within the scope of the invention are alternative embodiments of any size, shape or thickness, or embodiments of alternative material compositions, that could provide the flange 13 with the capability of being displaced in an axial direction, and absorb and store a portion of any energy imparted on the flange 13 by an applied force. In another embodiment, the flange 13 does not include the flange relief groove 30 as a feature to decrease the mechanical resistance of the flange 13.

As the described electronics packaging invention could be used to package any number of different electronic components in a wide variety of different applications, the fact that the invention disclosed is applied to an inertial measurement unit (IMU) packaging application for aviation purposes in no way limits this invention to aviation applications or to the packaging of IMU sensors and electronics.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

## Claims

1. An apparatus comprising:
a housing (10) configured to receive an electronics package;
a sleeve (12) having a flange (13), the sleeve being configured to receive the housing;
a locking mechanism (24) configured to hold the housing against the flange.

2. The apparatus of Claim 1, wherein the sleeve is substantially cylindrical.

3. The apparatus of Claim 2, wherein the sleeve includes an annular groove (22) at an end opposite the flange, the annular groove being configured to receive the locking mechanism.

4. The apparatus of Claim 3, wherein the locking mechanism is a snap ring (24).

5. The apparatus of Claim 1, wherein the flange is flexible.

6. The apparatus of Claim 5, wherein a cross-sectional profile of the flange is hook-shaped.

7. The apparatus of Claim 5, wherein the flange further comprises a flange stiffness tuning feature (30).

8. The apparatus of Claim 5, wherein the flange partially circumscribes the sleeve.

9. The apparatus of Claim 1, wherein the electronics package comprises an inertial measurement unit.

10. A method for enclosing electronics comprising:
applying a constant force at a first end of a housing (10) using a locking mechanism (24) received in a locking groove (24) of a sleeve (12), the sleeve being configured to receive the housing, the housing being configured to receive electronics; and
applying a force opposing the first force at an opposite end of the housing by a flange (13) located at a second end of the sleeve.
